# EUROPÄISCHE PATENTSCHRIFT

(11) **EP 3 860 869 B1**
(45) Veröffentlichungstag und Bekanntmachung des Hinweises auf die Patenterteilung: **30.08.2023**
(21) Anmeldenummer: 19779458.9
(22) Anmeldetag: 26.09.2019
(51) Int. Cl.: B60D 1/06, B60D 1/54, B60D 1/62, B60D 1/24

(54) **ANHÄNGEKUPPLUNG**
TRAILER COUPLING
ATTELAGE DE REMORQUE

(30) Priorität: 04.10.2018 DE 102018124549
(43) Veröffentlichungstag der Anmeldung: 11.08.2021
(73) Patentinhaber: WESTFALIA - Automotive GmbH, 33378 Rheda-Wiedenbrück (DE)
(72) Erfinder: ANGERMANN, Kay, 04720 Döbeln (DE); SIELHORST, Bernhard, 33378 Rheda-Wiedenbrück (DE); GRINGEL, Raphael, 33647 Bielefeld (DE)
(74) Vertreter: Patentanwälte Bregenzer und Reule Partnerschaftsgesellschaft mbB
(86) Internationale Anmeldenummer: PCT/EP2019/076070
(87) Internationale Veröffentlichungsnummer: WO 2020/069977

(56) Entgegenhaltungen:
- DE-A1- 19 711 535
- DE-A1- 19 858 978
- DE-A1-102010 030 828

## Beschreibung

Die Erfindung betrifft eine Anhängekupplung für ein Kraftfahrzeug mit einem Kuppelelement, welches anhand eines Lagers zwischen einer Gebrauchsstellung, in der es zum Anhängen eines Anhängers nach hinten vor ein Heck des Kraftfahrzeugs vorsteht, und einer Ruhestellung, in der es näher zu dem Kraftfahrzeug hin verstellt ist, verstellbar gelagert ist, gemäß dem Oberbegriff des Anspruchs 1.

Eine derartige Anhängekupplung ist beispielsweise in DE 10 2010 030 828 A1 beschrieben.

Zur Verstellung des Kuppelelements, also einem Kupplungsarm, einer aus EP 1 650 059 A1 bekannten Anhängekupplung ist ein seitlich an das Gehäuse der Anhängekupplung eingebauter Elektromotor vorgesehen, der über einen Spindeltrieb die Anhängekupplung bzw. deren Kuppelelement antreibt. Die bekannte Konstruktion ist aufwendig und für manche Einbausituation am Kraftfahrzeug zu voluminös.

Es ist daher die Aufgabe der vorliegenden Erfindung, eine verbesserte Anhängekupplung mit motorischem Antriebskonzept bereitzustellen.

Zur Lösung der Aufgabe ist eine Anhängekupplung gemäß der technischen Lehre des Anspruchs 1 vorgesehen.

Es ist ein Grundgedanke, dass der Antriebsmotor sozusagen einen integralen Bestandteil der Anhängekupplung bildet, wobei eine Komponente des Antriebsmotors, nämlich Stator oder Läufer, ortsfest an der einen Antriebskomponente, beispielsweise der Lagerbasis, der andere Teil des Motors, beispielsweise der Läufer, an der Läufer-Antriebskomponente und mithin am Lagerelement oder alternativ der Lagerbasis angeordnet ist.

Vorteilhaft ist vorgesehen, dass der Stator an der Lagerbasis und der Läufer an dem beweglichen Lagerelement angeordnet sind. Es ist auch möglich, dass der Stator an dem beweglichen Lagerelement und der Läufer an der Lagerbasis angeordnet sind.

Durch die Integration von Läufer und Stator in die Grundkomponenten des Lagers, nämlich Lagerbasis und beweglichem Lagerelement, sind beispielsweise gekapselte, geschützte Konstruktionen möglich. Zudem kann die Anhängekupplung kompakt und platzsparend aufgebaut sein.

Ein bevorzugtes und in der Zeichnung dargestelltes Konzept sieht vor, dass der Stator sozusagen ortsfest an der Lagerbasis angeordnet ist, so dass eine Bestromung bzw. Energieversorgung des Stators besonders leicht realisierbar ist. Insbesondere sind an dem Stator Erregerspulen zur Erzeugung eines magnetischen Felds und dergleichen mehr angeordnet, die bei Anordnung des Stators an der Lagerbasis ohne weiteres mit elektrischen Anschlussleitungen versehen werden können. Es ist aber grundsätzlich auch möglich, dass beispielsweise anhand von Schleifkontakten, beweglichen oder flexiblen Kabeln oder dergleichen, der Stator in dem beweglichen Lagerelement angeordnet ist, d.h. dass im Prinzip der Läufer an der Lagerbasis angeordnet ist, beispielsweise ein Permanentmagnet-Läufer, an dem sich der Stator sozusagen abstützt bzw. relativ zu dem der Stator sich anhand seiner Anordnung an dem Lagerelement dreht.

Eine Variante der Erfindung sieht vor, dass der Läufer an der Läufer-Antriebskomponente, beispielsweise dem Lagerelement, ortsfest angeordnet ist. Somit dreht sich also der Läufer relativ zu der von ihm angetriebenen Läufer-Antriebskomponente nicht oder bewegt sich auch nicht linear.

Weiterhin ist es vorteilhaft, wenn der Läufer die Läufer-Antriebskomponente, also beispielsweise das Lagerelement, ohne ein zwischengeschaltetes Getriebe antreibt. Somit ist ein Direktantrieb realisiert. Bei entsprechend starkem Drehmoment, welches der Läufer erfahren kann, wenn beispielsweise eine entsprechend starke Erregerspulenanordnung oder Statorspulenanordnung vorhanden ist, braucht man kein zwischengeschaltetes Getriebe.

Es ist aber auch möglich, dass der Läufer zwar an der Läufer-Antriebskomponente angeordnet ist, jedoch nicht ortsfest, sondern gemäß einer anderen Variante der Erfindung beweglich. Beispielsweise ist der Läufer an der Läufer-Antriebskomponente drehbar gelagert. Der Läufer kann beispielsweise anhand eines oder mehrerer Drehlager an der Läufer-Antriebskomponente drehbar gelagert sein. Es ist aber auch möglich, dass der Läufer an der Läufer-Antriebskomponente linear gelagert ist, beispielsweise auch um Bewegungen beim Verriegeln bzw. ortsfesten Fixieren des Lagerelements an der Lagerbasis mitzumachen. Die drehbare Lagerung oder die verschiebliche Lagerung oder die Kombination aus Drehlagerung und Schiebelagerung des Läufers an der Läufer-Antriebskomponente ermöglicht also beispielsweise ein Bewegungsspiel bei einer Verriegelung oder Fixierung der Läufer-Antriebskomponente relativ zur Stator-Antriebskomponente.

Aber auch für ein erweitertes Antriebskonzept eignet sich die drehbare oder sonstige bewegliche Lagerung des Läufers relativ zur Läufer-Antriebskomponente:
Der Läufer ist mit der Läufer-Antriebskomponente, z.B. dem Lagerelement, anhand mindestens eines Getriebeelements eines Getriebes erfindungsgemäß bewegungsgekoppelt, anhand dessen der Läufer die Läufer-Antriebskomponente, z.B. das Lagerelement, antreibt. Mithin treibt also der Läufer die Läufer-Antriebskomponente nicht direkt an, sondern über ein Getriebeelement des Getriebes, z.B. ein Planetenrad, ein Hohlrad oder dergleichen. So ist es beispielsweise möglich, dass der Läufer ein Getrieberad umfasst, welches an einem Hohlrad entlang läuft oder mit einem Hohlrad kämmt, welches fest an der Läufer-Antriebskomponente angeordnet ist.

Bevorzugt ist es, wenn das Getriebe ein Planetengetriebe ist oder umfasst.

Das mindestens eine Getriebeelement, anhand dessen der Läufer mit der Läufer-Antriebskomponente bewegungsgekoppelt ist, umfasst beispielsweise ein Planetenrad oder ist dadurch gebildet. Es ist aber auch möglich, dass der Läufer ein Sonnenrad umfasst oder dadurch gebildet ist oder daran angeordnet ist.

Vorteilhaft ist es, wenn der Läufer an einem Getrieberad, zum Beispiel einem Sonnenrad, eines Getriebes angeordnet ist oder ein Getrieberad eines Getriebes bildet oder aufweist.

Weiterhin vorteilhaft ist es, wenn der Läufer in einem Innenraum eines Hohlrads oder sonstigen Getrieberads eines Getriebes angeordnet ist. Das Hohlrad oder Getrieberad ist vorzugsweise ortsfest am Lagerelement angeordnet.

Ein bevorzugtes Konzept sieht vor, dass der Läufer einen Rotor bildet, der bezüglich des Stators um eine Drehachse antreibbar ist. Mithin ist also der Antriebsmotor vorzugsweise ein Drehantrieb.

Es ist aber auch möglich, dass der Läufer einen Linear-Läufer bildet, der bezüglich des Stators entlang einer Längsachse oder linearen Achse antreibbar ist. Somit bildet der Antriebsmotor beispielsweise einen Linearantrieb.

An diese Stelle sei bemerkt, dass eine Kombination aus Linearantrieb und Drehantrieb ohne weiteres möglich ist, um den erfindungsgemäß angeordneten Antriebsmotor zu realisieren.

Es ist weiterhin möglich, dass die Anhängekupplung gemäß der Erfindung zwei Antriebsmotoren umfasst, beispielsweise zwei Dreh-Antriebsmotoren, zwei Linear-Antriebsmotoren oder Kombinationen aus Dreh-Antriebsmotor und Linear-Antriebsmotor. So kann beispielsweise der eine Antriebsmotor, dessen Läufer und Stator in die Anhängekupplung bzw. das Lagerelement in die Lagerbasis integriert sind, das Lagerelement relativ zur Lagerbasis dreh-antreiben, während der andere Antriebsmotor, dessen Läufer beispielsweise auch in das Lagerelement integriert ist, eine axiale Verstellung entlang der Drehachse bezüglich der Lagerbasis bewirkt. Somit können beispielsweise Formschlusskonturen an Lagerbasis und Lagerelement außer Eingriff oder in Eingriff gebracht werden, um das Lagerelement bezüglich der Lagerbasis zu entriegeln oder zu fixieren.

Ferner ist es möglich, dass die Verriegelungseinrichtung mindestens ein mit einer radialen Bewegungskomponente zu einer Drehachse, um die das Lagerelement bezüglich der Lagerbasis drehbar ist, betätigbares Formschlusselement aufweist, welches in einer Fixierstellung, in der das Lagerelement bezüglich der Lagerbasis drehfest fixiert ist, in mindestens ein Gegen-Formschlusselement eingreift und in einer Lösestellung, in der das Lagerelement bezüglich der Lagerbasis drehbar ist, außer Eingriff mit dem mindestens einen Gegen-Formschlusselement ist. Beispielsweise ist das mindestens eine Formschlusselement durch eine Betätigungsschräge an einem Betätigungskörper zwischen der Fixierstellung und der Lösestellung verstellbar. Der Betätigungskörper ist beispielsweise entlang einer zu der radialen Bewegungskomponente quer verlaufenden Stellachse verstellbar gelagert, insbesondere in oder an einem Lagerkörper oder Wellenkörper der Lagerbasis. Der Betätigungskörper ist beispielsweise ein Bolzenkörper. Das mindestens eine Formschlusselement umfasst beispielsweise eine Kugel, das mindestens eine Gegen-Formschlusselement eine Kugelkalotte oder sonstige Kugelaufnahme. Die Fixierstellung ist beispielsweise der Gebrauchsstellung und/oder der Ruhestellung des Lagerelements oder Kuppelelements zugeordnet, während die Lösestellung eine Verstellung des Lagerelements zwischen der Gebrauchsstellung und der Ruhestellung ermöglicht.

Der Läufer bildet zweckmäßigerweise einen Außenläufer, in dessen Innenraum der Stator angeordnet ist. Es ist aber auch möglich, dass der Läufer in einem Innenraum des Stators angeordnet ist, wie man das von typischen Drehantrieben kennt.

Ein bevorzugtes Konzept sieht eine Lagerung des Lagerelements bezüglich der Lagerbasis anhand von mindestens zwei oder mehreren Drehlagern vor. Bevorzugt ist beispielsweise, dass das Lagerelement bezüglich der Lagerbasis um eine Drehachse anhand von mindestens zwei bezüglich der Drehachse in einem Längsabstand angeordneten Drehlagern gelagert ist. Zwischen den Drehlagern ist vorzugsweise der Stator angeordnet. Somit ist eine besonders steife und stabile Lagerung möglich. Es ist aber auch möglich, dass der Stator in Bezug auf die Drehachse einen Längsabstand zu den Drehlagern des Lagerelements, mit denen dieses an der Lagerbasis gelagert ist, aufweist.

Die Anhängekupplung weist zweckmäßigerweise eine Verriegelungseinrichtung auf, mit der das Lagerelement bezüglich der Lagerbasis verriegelbar ist. Beispielsweise greifen Formschlusskonturen von Lagerelement und Lagerbasis in einer Verriegelungsstellung oder Fixierstellung ineinander ein, sind in einer Lösestellung jedoch voneinander entfernt oder außer Eingriff, so dass das Lagerelement bezüglich der Lagerbasis beweglich, beispielsweise drehbar und/oder linear verschieblich, ist.

Die Verriegelungseinrichtung kann beispielsweise zu einer Drehverriegelung und/oder Linearverriegelung des Lagerelements bezüglich der Lagerbasis ausgestaltet sein. Anhand der Verriegelungseinrichtung ist das Lagerelement somit das Kuppelelement, beispielsweise ein Kupplungsarm, bezüglich der Lagerbasis in der Ruhestellung und/oder der Gebrauchsstellung verriegelbar und/oder ortsfest fixierbar.

Die Verriegelungseinrichtung und/oder der Betätigungskörper ist zweckmäßigerweise durch eine Federanordnung in Richtung der Verriegelungsstellung und/oder aus der Verriegelungsstellung belastet.

Die Verriegelungseinrichtung weist zweckmäßigerweise einen motorischen Verriegelungsantrieb, beispielsweise einen Elektromotor, zu einer Betätigung der Verriegelungseinrichtung in die Verriegelungsstellung und/oder aus der Verriegelungsstellung auf. Der Verriegelungsantrieb kann das zu betätigende Element, beispielsweise einen Formschlusskörper oder einen Betätigungskörper für Formschlusskörper oder für Verriegelungskörper, direkt antreiben, also ein Direktantrieb sein. Ohne weiteres ist es aber auch möglich, dass der motorische Verriegelungsantrieb das zu betätigende Element der Verriegelungseinrichtung, wiederum also vorzugsweise den Betätigungskörper, über ein Getriebe, beispielsweise ein Zahnstangengetriebe oder dergleichen, antreibt.

Es können mehrere Verriegelungsstellungen vorgesehen sein, beispielsweise für eine Verriegelung des Lagerelements bezüglich der Lagerbasis in der Ruhestellung und/oder der Gebrauchsstellung.

In mindestens einer zur Verriegelung des Lagerelements bezüglich der Lagerbasis vorgesehenen Relativposition von Lagerelement und Lagerbasis, beispielsweise in der Ruhestellung und/oder in der Gebrauchsstellung, weist der Läufer bezüglich des Stators zweckmäßigerweise ein die Verriegelung ermöglichendes Bewegungsspiel auf. Somit ist also beispielsweise das Kuppelelement relativ zur Lagerbasis in eine Schwenkstellung oder Linearstellung verstellbar, in der eine Verriegelung möglich ist und/oder vorgesehen ist, beispielsweise eine Verriegelung in der Gebrauchsstellung und/oder eine Verriegelung in der Ruhestellung. Die Verriegelungseinrichtung kann die Verriegelung vornehmen, ohne dass der Antriebsmotor sozusagen hinderlich wäre. Das Bewegungsspiel ist beispielsweise ein lineares oder axiales Bewegungsspiel. Es kann aber auch ein Dreh-Bewegungsspiel umfassen oder sein oder eine Kombination aus linearem Bewegungsspiel und Dreh-Bewegungsspiel.

Vorteilhaft ist es, wenn der Antriebsmotor, beispielsweise dessen Stator, von mindestens einer Komponente der Verriegelungseinrichtung durchsetzt ist oder einen Aufnahmeraum für die Komponente der Verriegelungseinrichtung aufweist. So kann beispielsweise ein Betätigungskörper, insbesondere ein Betätigungsbolzen, und/oder eine den Betätigungskörper in Richtung beispielsweise der Verriegelungsstellung oder der Entriegelungsstellung oder Lösestellung belastende Feder und/oder eine Komponente des motorischen Verriegelungsantriebs, beispielsweise dessen Läufer, den Antriebsmotor durchsetzen oder in den Aufnahmeraum des Antriebsmotors eingreifen.

Der Betätigungskörper dient zur Betätigung mindestens eines Verriegelungskörpers und/oder eines Formschlusselements, welches in einer Verriegelungsstellung in eine Verriegelungsaufnahme eingreift oder mit einem Gegen-Formschlusselement in Eingriff ist.

Der Betätigungskörper ist beispielsweise linear und/oder rotatorisch verstellbar, um das mindestens eine Formschlusselement oder den mindestens einen Verriegelungskörper in die Verriegelungsstellung und/oder aus der Verriegelungsstellung zu betätigen.

Das mindestens eine Formschlusselement ist durch den Betätigungskörper beispielsweise radial bezüglich einer Längsachse des Betätigungskörpers und/oder radial bezüglich einer Schwenkachse, um die das Lagerelement bezüglich der Lagerbasis schwenkbar gelagert ist, zwischen der Verriegelungsstellung und der Lösestellung verstellbar. In der Verriegelungsstellung greift das mindestens eine Formschlusselement in das Gegen-Formschlusselement ein.

Vorteilhaft ist weiterhin, wenn der Antriebsmotor und/oder ein von dem Antriebsmotor angetriebenes Getriebe zum Antreiben des Lagerelements bezüglich der Lagerbasis zwischen Verriegelungskomponenten der Verriegelungseinrichtung angeordnet ist, die das Lagerelement bezüglich der Lagerbasis drehfest und/oder verschiebefest verriegeln. So können beispielsweise an einem Längsendbereich des Antriebsmotors oder des Getriebes oder beiden Formschlusselemente vorgesehen sein, die das Lagerelement bezüglich der Lagerbasis drehfest verriegeln und am entgegengesetzten Längsendbereich des Antriebsmotors oder des Getriebes oder beiden Formschlusselemente vorgesehen sein, die das Lagerelement bezüglich der Lagerbasis verschiebefest, beispielsweise bezüglich einer Drehachse, um die das Lagerelement bezüglich der Lagerbasis drehen kann, verriegeln.

Der Stator weist zweckmäßigerweise eine Erregerspulenanordnung auf. Beispielsweise hat der Stator ein Blechpaket mit mehreren Erregerspulen, die durch eine Bestromungseinrichtung bestrombar sind. Mit der Erregerspulenanordnung, die man auch als Statorspulenanordnung bezeichnen kann, ist beispielsweise durch Bestromung der Erregerspulen oder Statorspulen ein magnetisches Drehfeld zum Antreiben des Läufers erzeugbar.

Der Läufer kann beispielsweise ein ebenfalls elektrische Spulen aufweisender Läufer sein. In einem einfachen Ausführungsbeispiel ist der Antriebsmotor dann beispielsweise ein Universalmotor.

Bevorzugt ist jedoch, wenn der Läufer sozusagen elektrisch neutral ist bzw. keine Anschlussleitungen benötigt:
Ein bevorzugtes Konzept sieht z.B. einen Läufer mit einer Magnetanordnung oder einen Kurzschlussläufer vor. Somit sind keine elektrischen Leitungen zum Läufer zu führen.

Bei dem Antriebsmotor handelt es sich zweckmäßigerweise um einen elektronisch kommutierten Antriebsmotor und/oder einen bürstenlosen Motor. Ein derartiger Motor ist besonders wartungsarm. Allerdings kann für den typischen Gebrauch einer Anhängekupplung, bei der ja über die Lebenszeit oder Lebensdauer nur eine vorbestimmte Anzahl von Bewegungszyklen typisch ist, auch ein Antriebsmotor eingesetzt werden, der Bürsten oder dergleichen andere elektrische Leistung vom Stator zum Läufer übertragenden Komponenten aufweist.

Die Lagerbasis weist vorteilhaft einen Aufnahmeraum für eine Bestromungseinrichtung zum Bestromen des Antriebsmotors, z.B. der Erregerspulenanordnung oder Statorspulenanordnung, auf. Beispielsweise ist somit die Bestromungseinrichtung direkt vor Ort angeordnet. Selbstverständlich kann auch an einer anderen Stelle der Stator-Antriebskomponente, an der der Stator angeordnet ist eine Bestromungseinrichtung, vorgesehen sein, beispielsweise an einer Außenwandfläche der Lagerbasis.

Ebenfalls vorteilhaft ist es, wenn die Stator-Antriebskomponente, beispielsweise die Lagerbasis, ein Schutzgehäuse für eine Bestromungseinrichtung zum Bestromen des Antriebsmotors bildet oder aufweist. Somit kann die beispielsweise eine Leistungselektronik umfassende Bestromungseinrichtung direkt vor Ort, an der Stator-Antriebskomponente, angeordnet sein. Die Leitungswege zur Erregerspulenanordnung des Stators sind in diesem Fall äußerst kurz und können mechanisch optimal gegen Umwelteinflüsse geschützt werden.

Weiterhin ist es vorteilhaft, wenn die jeweilige Antriebskomponente den von ihr aufgenommenen Bestandteil des Antriebsmotors kapselt oder schützt. So ist es beispielsweise vorteilhaft, wenn die Stator-Antriebskomponente, z.B. die Lagerbasis, den Stator kapselt oder schützt. Weiterhin ist es vorteilhaft, wenn die Läufer-Antriebskomponente, z.B. das Lagerelement, den Läufer kapselt.

Es ist auch möglich, dass der Antriebsmotor ganz oder teilweise in dem Lagerelement aufgenommen ist, in welches ein Lagerkörper, beispielsweise eine Lagerwelle, der oder die von der Lagerbasis absteht, eingreift und an der das Lagerelement um eine Drehachse drehbar und/oder eine Linearachse oder Stellachse, insbesondere linear, verschieblich gelagert ist.

Der Antriebsmotor ist zweckmäßigerweise in dem Lager der Anhängekupplung eingehaust. Das Lager bildet vorteilhaft ein Schutzgehäuse für den Antriebsmotor.

Vorteilhaft ist es, wenn das Lagerelement ein Schutzgehäuse für den Antriebsmotor bildet. Beispielsweise weist das Lagerelement eine Umfangswand und eine von der Lagerbasis abgewandte Stirnwand oder Stirnseite auf. Der Antriebsmotor ist zwischen der Stirnwand oder Stirnseite und der Lagerbasis angeordnet und von der Umfangswand eingehaust.

Weiterhin zweckmäßig ist es, wenn das Lagerelement einen Deckel aufweist, mit dem ein Innenraum des Lagerelements, in welchem der Antriebsmotor angeordnet ist, verschlossen oder verschließbar ist. Der Deckel hat vorzugsweise eine Durchtrittsöffnung für einen Lagerkörper, der von der Lagerbasis absteht und an dem das Lagerelement drehbar gelagert ist.

Vorteilhaft ist weiterhin, wenn eine Drehachse des Antriebsmotors, also eine Drehachse, mit der der Läufer relativ zum Stator drehbar gelagert ist, und eine Drehachse, um die das Lagerelement bezüglich der Lagerbasis drehbar gelagert ist, koaxial oder parallel ist.

Der Antriebsmotor und/oder ein Getriebe, über das der Antriebsmotor das Lagerelement antreibt, ist vorteilhaft zwischen der Lagerbasis und einer von der Lagerbasis abgewandten Stirnwand oder Stirnseite des Lagerelements angeordnet. Beispielweise kann vorgesehen sein, dass der Antriebsmotor sowie ein Umlaufrädergetriebe, Planetengetriebe oder dergleichen, zwischen Stirnwänden der Lagerbasis und des Lagerelements angeordnet ist.

Weiterhin vorteilhaft ist es, wenn in dem Schutzgehäuse, welches insbesondere durch das Lagerelement gebildet ist, sowohl der Antriebsmotor als auch das Getriebe, über welches der Antriebsmotor das Lagerelement antreibt, angeordnet sind. Das Schutzgehäuse wird beispielsweise von dem Lagerelement alleine oder in Kombination mit der Lagerbasis bereitgestellt. Das Schutzgehäuse kann auch durch einen Deckel verschlossen sein, der das Lagerelement oder einen Innenraum des Lagerelements verschließt.

Da der Läufer an der einen Komponente von Lagerbasis und Lagerelement und der Stator an der anderen Komponente von Lagerbasis und Lagerelement angeordnet oder anordenbar sind, ist auch die nachfolgende Maßnahme ohne weiteres möglich:
Vorteilhaft ist es, wenn der Läufer mit dem Stator durch Montage des Lagerelements an der Lagerbasis in Eingriff bringbar oder in Eingriff gebracht ist. So kann beispielsweise der Läufer in einem Innenraum des Stators eingreifen oder der Stator in einen Innenraum des Läufers eingreifen, wenn das Lagerelement an der Lagerbasis, beispielsweise durch eine Steckmontage, montiert wird.

Nachfolgend werden Ausführungsbeispiele der Erfindung anhand der Zeichnung erläutert. Es zeigen:
- Figur 1: eine Explosionsdarstellung einer Anhängekupplung,
- Figur 2: eine Seitenansicht einer Lagerbasis der Anhängekupplung gemäß Figur 1,
- Figur 3: eine perspektivische Explosionsdarstellung der Anhängekupplung gemäß Figur 1,
- Figur 4: die Anhängekupplung gemäß Figuren 1 - 3 in perspektivischer Darstellung mit ihrem Kuppelelement, welches zwischen zwei Stellungen verstellt ist,
- Figur 5: eine Schnittdarstellung eines weiteren Ausführungsbeispiels einer Anhängekupplung,
- Figur 6: eine Schnittdarstellung eines weiteren Ausführungsbeispiels einer Anhängekupplung,
- Figur 7: eine Schnittdarstellung eines weiteren Ausführungsbeispiels einer Anhängekupplung,
- Figur 8: einen Teilschnitt durch die Anhängekupplung gemäß Figur 7, etwa entlang einer Schnittlinie A-A.

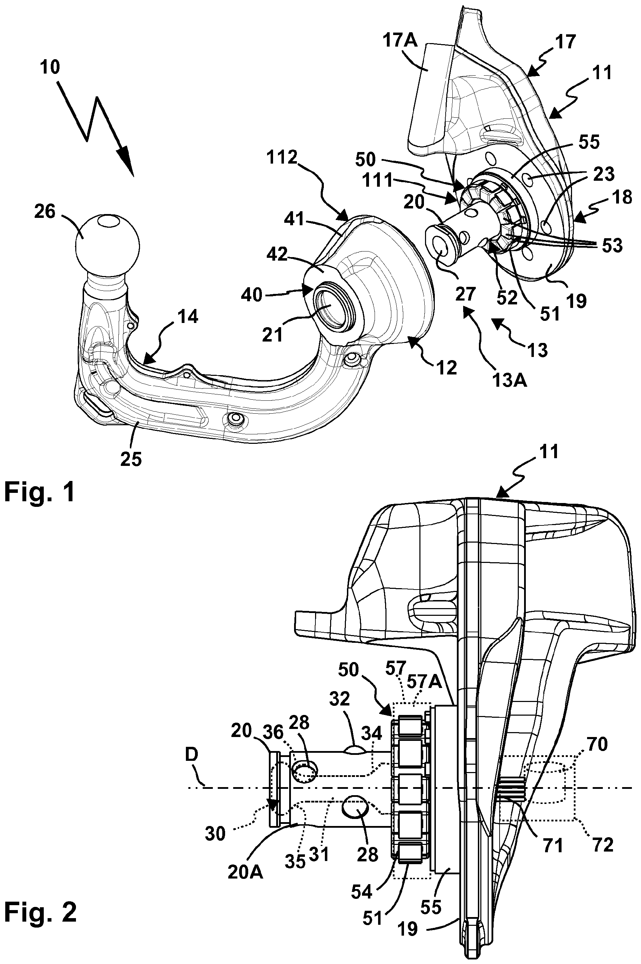

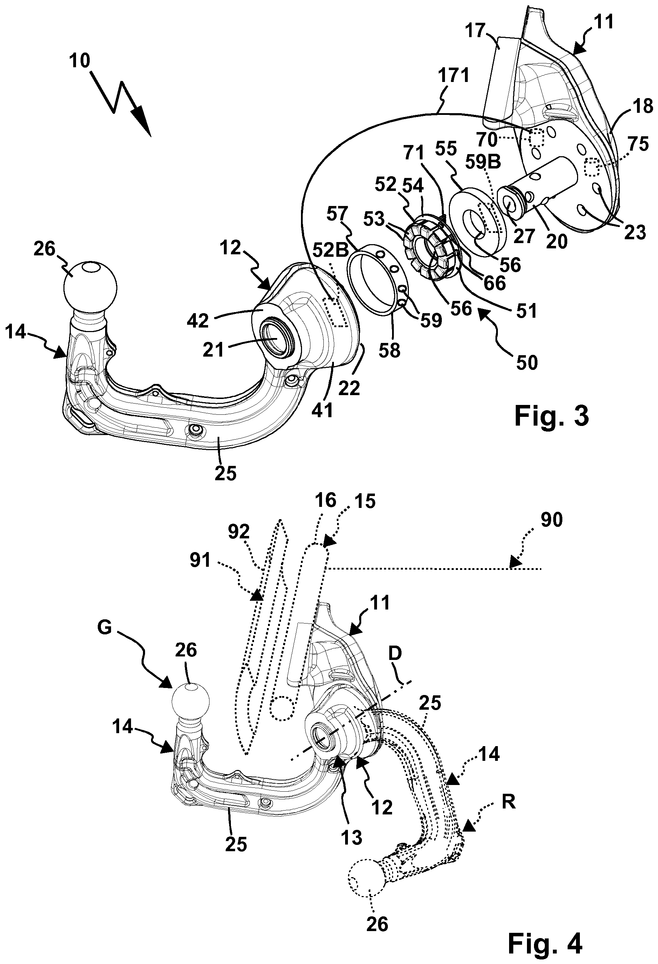

Insoweit in der Beschreibung gleiche oder ähnliche Komponenten verwendet sind, haben sie dieselben Bezugsziffern, die teilweise zur Unterscheidung der Ausführungsbeispiele gemäß Figuren 1 bis 4, 5, 6 und 7 um jeweils einhundert verschieden sind.

Anhängekupplungen 10, 110, 210, 310 gemäß Figuren 1 bis 4, 5, 6 und 7, weisen jeweils eine Lagerbasis 11, an der ein Lagerelement 12 um eine Drehachse D drehbar gelagert ist, auf. Die Lagerbasis 11 und das Lagerelement 12 bilden Bestandteil eines Lagers 13, 113 mit dem ein Kupplungsarm 14, also ein Kuppelelement 14 zwischen einer Gebrauchsstellung G und einer Ruhestellung R beweglich gelagert ist bezüglich der Lagerbasis 11 gelagert ist, beispielsweise vor ein Heck 91.

Die Lagerbasis 11 ist an einem Kraftfahrzeug 90, beispielsweise einem Personenkraftwagen, befestigt. Beispielsweise weist die Anhängekupplung 10 eine Trägeranordnung 15 mit einem Querträger 16 auf, der sich quer am Heck 91 des Kraftfahrzeugs 90 erstreckt und vorzugsweise unter dessen Stoßfänger 92 verborgen angeordnet ist. Der Querträger 16 ist mit in der Zeichnung nicht dargestellten Seitenträgern oder sonstigen Halterungen an einer Karosserie des Kraftfahrzeugs 90 befestigt oder befestigbar. Mithin kann die Anhängekupplung 10 ohne weiteres eine Nachrüst-Anhängekupplung sein, also eine Anhängekupplung, die bei vorhandenen Kraftfahrzeugen, die noch keine Anhängekupplung aufweisen, nachgerüstet werden kann.

Die Lagerbasis weist beispielsweise einen Stützabschnitt 17 auf, an dem eine Aufnahme 17A für den Querträger 16 vorgesehen ist. Eine Verschraubung, Verschweißung oder dergleichen andere Befestigung der Lagerbasis 11 mit dem Querträger 16 ist aus Gründen der Vereinfachung in der Zeichnung nicht dargestellt. Von dem Stützabschnitt 17 steht ein Lagerabschnitt 18 ab. Der Lagerabschnitt 18 weist eine Stützfläche 19 für das Lagerelement 12 sowie einen Lagerkörper 20, beispielsweise einen Wellenkörper 20A, zum drehbaren Lagern des Lagerelements 12 auf. Der Lagerabschnitt 18 ist beispielsweise plattenartig. Das Lagerelement 12 steht rechtwinklig vor die Stützfläche 19 vor.

Der wellenartige Lagerkörper 20, den man auch als einen Hohlwellenkörper bezeichnen kann (was nachfolgend noch deutlicher wird), greift in eine sich entlang der Drehachse D erstreckende Lageraufnahme 21 des Lagerelements 12 ein, sodass das Lagerelement 12 um die Drehachse D an der Lagerbasis 11 drehen kann.

Die Lageraufnahme 21 erstreckt sich von einer Stützfläche 22 des Lagerelements 12 weg, mit der sich das Lagerelement 12 an der Stützfläche 19 der Lagerbasis 11 abstützen kann. An den Stützflächen 19, 22 sind Formschlusselemente 23 und Gegen-Formschlusselemente 24, beispielsweise Kugelkalotten und Kugeln, Verzahnungen oder dergleichen andere formschlüssig ineinander eingreifende Formschlusselemente vorgesehen. Durch eine axiale Verstellung des Lagerelements 12 relativ zur Lagerbasis 11 entlang der Drehachse D, die diesbezüglich eine Linearachse bildet, können die Formschlusselemente 23 in Eingriff mit den Gegen-Formschlusselementen 24 und außer Eingriff mit denselben gebracht werden. Wenn die Formschlusselemente 23, 24 ineinander eingreifen, ist die Anhängekupplung 10 in der Ruhestellung R und/oder Gebrauchsstellung G verriegelt und/oder ortsfest fixiert, also einer Fixierstellung. Wenn die Formschlusselemente 23 außer Eingriff mit den Gegen-Formschlusselementen 24 sind, entspricht dies einer Lösestellung, in der das Lagerelement 12 relativ zur Lagerbasis 11 um die Drehachse D drehbar ist.

Von dem Lagerelement 12 steht das Kuppelelement 14 ab. Das Kuppelelement 14 umfasst beispielsweise einen Armabschnitt 25, der am einen Ende mit dem Lagerelement 12 verbunden, insbesondere einstückig, ist, am anderen, freien Ende, einen Kuppelkörper 26, beispielsweise eine Kupplungskugel trägt. In der Gebrauchsstellung G steht zumindest der Kuppelkörper 26 vor das Heck 91 des Kraftfahrzeugs 90 vor, so dass dort an den Kuppelkörper 26 ein Anhänger, Lastenträger oder dergleichen anderes zum Befestigen des Bauteils angekuppelt werden kann. In der Ruhestellung R hingegen ist der Kuppelkörper 26 weiter zu dem Heck 91 des Kraftfahrzeugs 90 hin verstellt. Vorzugsweise ist das Kuppelelement 14 in der Ruhestellung R ganz oder im Wesentlichen hinter und/oder unter dem Stoßfänger 92 verborgen.

In der Gebrauchsstellung G und der Ruhestellung R ist das Lagerelement 12 bezüglich der Lagerbasis 11 in Bezug auf eine Längsverstellung entlang der Drehachse D anhand einer Verriegelungseinrichtung 30 verriegelbar, so dass die Formschlusselemente 23, 24 in Eingriff gehalten werden.

Die Verriegelungseinrichtung 30 umfasst einen Betätigungskörper 31, beispielsweise eine Art Bolzen oder Bolzenkörper, welcher zur Betätigung von Verriegelungskörpern 32, beispielsweise Kugeln oder dergleichen andere Formschlusselemente, dient. Der Betätigungskörper 31 ist in einem Bewegungsraum 27, beispielsweise einem Hohlraum, des Lagerkörpers 20 entlang einer Stellachse S axial verschieblich gelagert, beispielsweise parallel zur Drehachse D.

Durch axiale Verstellung des Betätigungskörpers 31 betätigt dieser Verriegelungskörper 32 in eine Verriegelungsaufnahme 33 hinein, die an dem Lagerelement 12 angeordnet ist. Die Verriegelungsaufnahme 33 umfasst beispielsweise eine Rinne, einzelne, diskrete Aufnahmen, zum Beispiel Kugelkalotten, für die Verriegelungskörper 32 oder dergleichen. Zur Betätigung der Verriegelungskörper 32 ist an dem Betätigungskörper 31 eine Betätigungsschräge 34, beispielsweise eine Keilschräge oder dergleichen, vorgesehen.

Die Verriegelungskörper 32 bilden beispielsweise Formschlusselemente 32A, welche in Gegen-Formschlusselemente 33A, nämlich die Verriegelungsaufnahme 33, eingreifen, um das Lagerelement 12 bezüglich der Lagerbasis 11 axial und/oder drehfest bezüglich der Stellachse S oder Drehachse D zu fixieren.

Wenn die Verriegelungsaufnahmen 33 als Aufnahmen ausgestaltet sind, in denen die Verriegelungskörper 32 um die Stellachse S oder Drehachse D rotatorisch beweglich sind, ist eine axiale Fixierung des Lagerelements 12 bezüglich der Lagerbasis 11 bezüglich der Stellachse S oder Drehachse D realisiert.

Wenn beispielsweise die Verriegelungsaufnahmen 33 als Aufnahmen ausgestaltet sind, in denen die Verriegelungskörper 32 nicht um die Stellachse S oder Drehachse D rotatorisch beweglich sind, ist eine Drehfixierung des Lagerelements 12 bezüglich der Lagerbasis 11 bezüglich der Drehachse D oder Stellachse S realisiert. Dabei ist eine Kombination dieser sozusagen radialen Fixierung mit der vorgenannten axialen Fixierung möglich, wenn nämlich die Gegen-Formschlusselemente 33A eine Bewegung der Formschlusselemente 32A entlang der Stellachse S oder Drehachse D blockieren oder verhindern.

Der Betätigungskörper 31 kann aber auch dazu dienen, das Lagerelement 12 von der Lagerbasis 11 im Sinne eines Auseinanderbewegens der Formschlusselemente 23, 24 entlang der Drehachse D anzutreiben. Dazu wirkt der Betätigungskörper 31 anhand einer oder mehrerer Löseschrägen 35 auf den mindestens einen Entriegelungskörper 36, beispielsweise mindestens eine Kugel, die an einer Entriegelungsschräge 37, welche ortsfest an dem Lagerelement 12 angeordnet ist, einwirken, um dieses von der Lagerbasis 11 weg anzutreiben.

Die Verriegelungskörper 32 und die Entriegelungskörper 36 sind in Lageraufnahmen 28 des wellenartigen Lagerkörpers 20 beweglich gelagert, so dass sie bei Beaufschlagung durch den Betätigungskörper 31 nach radial außen vor einen Außenumfang des Lagerkörpers 20 gelangen und somit in die Verriegelungsaufnahme 33 hinein oder auf die Entriegelungsschräge 37 wirkend betätigbar sind. Die Verriegelungsaufnahme 33 und die Entriegelungsschräge 34, die beispielsweise an einer Rinne oder umlaufenden Nut vorgesehen sein kann, können einstückig mit dem Lagerelement 12 sein oder an einem daran angeordneten, insbesondere hülsenförmigen Träger 12A.

Es ist vorteilhaft, wenn eine Feder 38 den Betätigungskörper 31 in die Verriegelungsstellung betätigt, in der die Verriegelungskörper 32 in die Verriegelungsaufnahme 33 eingreifen. Die Feder 38 stützt sich beispielsweise an einem Stützkörper 29 oder Stützabschnitt der Lagerbasis 11 ab. Der Stützkörper 29 ist beispielsweise fest mit der Lagerbasis 11 verbunden oder bildet einen integralen Bestandteil derselben. Der Stützkörper 29 ist beispielsweise als ein hülsenförmiger, eine Bodenwand oder Stützfläche für die Feder 38 aufweisender, Körper ausgestaltet.

Zum Lösen des Betätigungskörpers 31 bzw. zum Verstellen in Richtung der Lösestellung oder Entriegelungsstellung, in der die Verriegelungskörper 32 durch die Lageraufnahmen 28, beispielsweise Bohrungen durch den Lagerkörper 20 hindurch, nach radial innen in Richtung des Betätigungskörpers 31 bzw. des Bewegungsraums 27 gelangen kann, betätigbar. In der Lösestellung oder Entriegelungsstellung greifen die Verriegelungskörper 32 nicht mehr in die Verriegelungsaufnahme 33 ein.

Die Verriegelungseinrichtung 30 kann manuell betätigbar sein, z.B. anhand eines an dem Betätigungskörper 31 angeordneten Handgriffes und/oder Betätigungszuges 139.

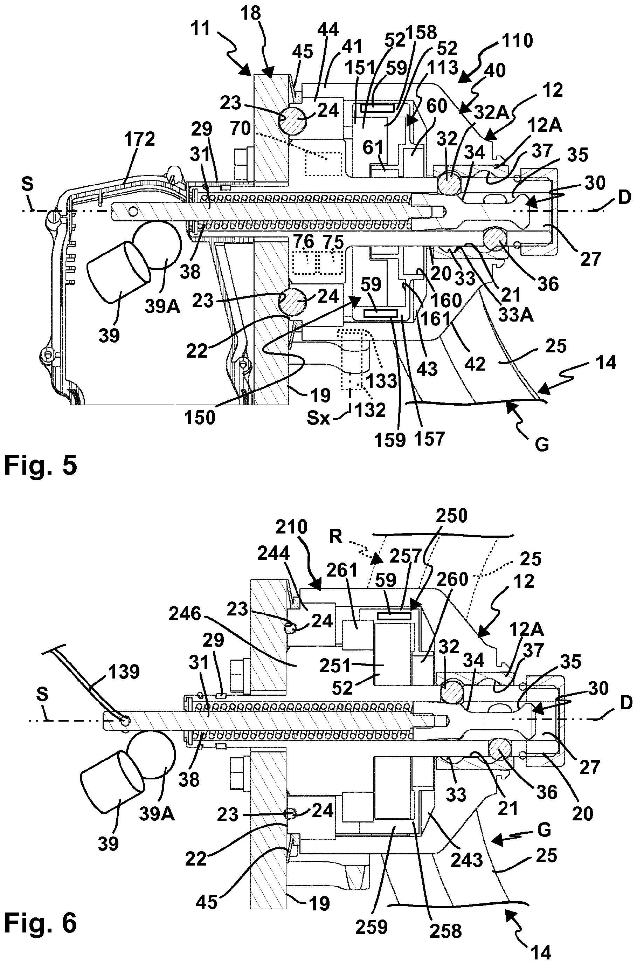

Bevorzugt ist jedoch ein motorisches Antriebskonzept, beispielsweise anhand eines Verriegelungsantriebs 39 (schematisch in Figur 5, 6 und 7 dargestellt). Der Verriegelungsantrieb 39 wirkt beispielsweise über ein Getriebe, zum Beispiel ein Antriebsrad 39A (in Figur 5 und 6), insbesondere ein Getrieberad, auf den Betätigungskörper 31 ein. An dem Betätigungskörper 31 ist beispielsweise eine in der Zeichnung nicht sichtbare Verzahnung oder Zahnkontur für das Antriebsrad 39A vorhanden.

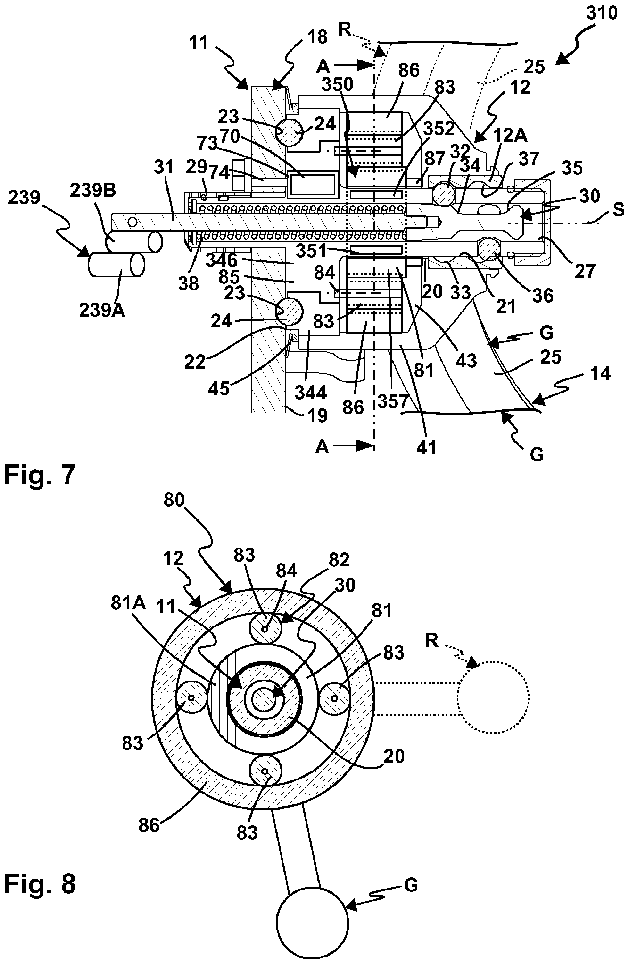

Alternativ kann auch ein Direktantrieb vorgesehen sein, beispielsweise ein Verriegelungsantrieb 239 (Figur 7). Vorteilhaft ist ein Stator 239A des Verriegelungsantriebs 239 bezüglich der Lagerbasis 11 ortsfest, während ein Läufer 239B des Verriegelungsantriebs 239, beispielsweise eine Magnetanordnung mit einem oder mehreren Permanentmagneten, am Betätigungskörper 31 angeordnet ist.

Das vorbeschriebene Verriegelungskonzept ist bekannt, beispielsweise aus EP 1 475 253 A1.

Selbstverständlich können auch andere Verriegelungskonzepte eingesetzt werden, beispielsweise Bolzen, Kugeln oder dergleichen andere Verriegelungskörper. Z.B. ist ein Verriegelungskörper 132 an der Lagerbasis 11 gelagert und in Eingriff mit einer Verriegelungsaufnahme 133 dem Lagerelement zu dessen Verriegelung relativ zur Lagerbasis bringbar, z.B. entlang einer Stellachse SX verschieblich.

Bei den Anhängekupplungen 10, 110, 210, 310 sind komfortable, jedoch kompakte und zuverlässige Antriebskonzepte mit Antriebsmotoren 50, 150, 250, 350 realisiert:
Der Antriebsmotor 50 umfasst einen Stator 51 mit einer Erregerspulenanordnung 52. Die Erregerspulenanordnung 52 kann auch als Statorspulenanordnung 52 bezeichnet sein. Der Stator 51 ist an der Lagerbasis 11 ortsfest festgelegt.

Die Erregerspulenanordnung 52 enthält mehrere, sich ringförmig um eine Motordrehachse des Antriebsmotors 50, die vorliegend der Drehachse D entspricht, angeordnete Erregerspulen 53. Die Erregerspulen 53 sind beispielsweise an einem Blechpaket oder sonstigen Erregerspulenträger 54 angeordnet. Zum Halten der Erregerspulenanordnung 52 dient ein Träger 55, beispielsweise ein ringförmiger Träger. Der Lagerkörper 20 ist durch eine Durchtrittsöffnung 56 des Stators durchgesteckt, deren Innenumfang am Außenumfang des Lagerkörpers 20 beispielsweise anliegt, aber auch einen Abstand dazu aufweisen kann. Der Träger 55 ist an der Stützfläche 19 abgestützt. Beispielsweise ist der Träger 55 mit der Stützfläche 19 verklebt, verschraubt oder dergleichen.

Ein Läufer 57 des Antriebsmotors 50 ist beispielsweise als ein Rotor 57A ausgestaltet, der um die Drehachse D drehbar gelagert ist.

Der Läufer 57 umfasst beispielsweise einen Ringkörper 58. Der Ringkörper 58 kann beispielsweise eine Magnetanordnung mit einem oder mehreren Permanentmagneten 59 umfassen, ein Kurzschlussläufer sein oder dergleichen. Der Läufer 57 ist an dem Lagerelement 12 ortsfest festgelegt, beispielsweise verklebt, verschweißt, formschlüssig gehalten oder dergleichen. Wenn also der Läufer 57 in eine Drehbewegung versetzt wird, nimmt er das Lagerelement 12 mit.

Vorzugsweise bilden die Lager 13, 113 Lageranordnungen 13A, mit denen der Läufer 57 bezüglich des Stators 51 um die Drehachse D drehbar gelagert ist.

Der Läufer 57 erstreckt sich im an der Lagerbasis 11 montierten Zustand des Lagerelements 12 am Außenumfang der Erregerspulenanordnung 52 und somit des Stators 51, bildet also einen Außenläufer.

In Bezug auf die Drehachse D, die zugleich die Stellachse S der Verriegelungseinrichtung 30 darstellt, entlang derer das Lagerelement 12 bezüglich der Lagerbasis 11 verschieblich ist, haben der Läufer 57 und der Stator 51 eine zueinander fluchtende Position, wenn die Verriegelungseinrichtung 30 ihre entriegelnden Stellung einnimmt. Somit kann ein von der bezüglich der Lagerbasis 11 ortsfesten Erregerspulenanordnung 52 erzeugtes, sich drehendes Magnetfeld optimal auf den Läufer 57 einwirken und diesen antreiben.

Zur Bestromung bzw. mit Versorgung elektrischer Energie der Erregerspulenanordnung 52 dient eine Bestromungseinrichtung 70. Die Bestromungseinrichtung 70 umfasst beispielsweise eine Brückenschaltung mit mehreren Brücken, an die die Erregerspulen 53 angeschlossen sind, sodass eine oder mehrere der Erregerspulen 53 durch die Bestromungseinrichtung 70 mit Strom bestrombar sind und in den Erregerspulen 53 ein elektrisches, sich um die Drehachse D drehendes und somit den Läufer 57 antreibendes Drehfeld erzeugt wird. Die Bestromungseinrichtung 70 ist beispielsweise anhand elektrischer Leitungen 71 mit der Erregerspulenanordnung 52 elektrisch verbunden.

Weiterhin vorteilhaft ist es, wenn die Anhängekupplung 70 beispielsweise eine Steuerungseinrichtung 75 aufweist, beispielsweise um den Verriegelungsantrieb 39, 239 und/oder den Antriebsmotor 50 anzusteuern und/oder zu überwachen. So kann beispielsweise die Steuerungseinrichtung 75 bei einer Betätigung des Verriegelungsantriebs 39, 239 den Antriebsmotor 50 blockieren und umgekehrt bei einer Betätigung des Antriebsmotors 50 den Verriegelungsantrieb 39 blockieren, sodass entweder eine Verriegelung oder Entriegelung der Anhängekupplung 10 oder eine Schwenkbewegung oder Stellbewegung zwischen der Ruhestellung R und der Gebrauchsstellung G erfolgt und/oder möglich ist.

Die Steuerungseinrichtung 75 kann beispielsweise anhand eines oder mehrerer Sensoren 76 eine jeweilige Stellung des Lagerelements 12 bezüglich der Lagerbasis 11, beispielsweise eine Drehstellung bezüglich der Drehachse D und/oder eine lineare Stellung bezüglich der Stellachse S, hier also ebenfalls der Drehachse D, erfassen, um den Verriegelungsantrieb 39, 239 und den Antriebsmotor 50 anzusteuern.

Die Steuerungseinrichtung 75 und die Bestromungseinrichtung 70 können ein einziges Modul oder eine einzige, integrale Einrichtung bilden.

Ein bevorzugtes Konzept sieht vor, dass die Steuerungseinrichtung 75 und die Bestromungseinrichtung 70 an der Lagerbasis 11 angeordnet sind.

Beispielsweise ist ein Aufnahmeraum an der Lagerbasis 11 vorhanden, insbesondere hinter der Stützfläche 19, in welchem die Bestromungseinrichtung 70 und/oder die Steuerungseinrichtung 75 angeordnet sind.

Die Bestromungseinrichtung 70 und/oder die Steuerungseinrichtung 75 können aber auch außenseitig an der Trägeranordnung 15 oder an dem Grundkörper der Lagerbasis 11 angeordnet sein.

Bevorzugt ist ein Schutzgehäuse 72 vorgesehen, in welchem die Bestromungseinrichtung 70 und/oder die Steuerungseinrichtung 75 geschützt angeordnet sind.

Auch der Antriebsmotor 50 ist optimal geschützt. Er ist in einem Innenraum 43 des Lagerelements 12 angeordnet, welches somit ein Schutzgehäuse 40 bildet. Der Innenraum 43 wird von einer Umfangswand 41 begrenzt, die sich um die Drehachse D herum erstreckt, sowie von einer Stirnwand 42, an der beispielsweise der hülsenförmige Träger 12A angeordnet ist.

Das Kuppelelement 12 ist beispielsweise an der Umfangswand 41 angeordnet und/oder steht von der Umfangswand 41 ab.

Ohne weiteres können die Bestromungseinrichtung 70 oder die Steuerungseinrichtung 75 beispielweise auch in einem Schutzgehäuse 172 der Anhängekupplung 110 angeordnet sein. In dem Schutzgehäuse 172 ist beispielsweise der Verriegelungsantrieb 39 der Verriegelungseinrichtung 30 angeordnet.

Am Ausführungsbeispiel der Anhängekupplung 110 wird auch deutlich, dass eine Kavität für die Steuerungseinrichtung 75 und/oder die Bestromungseinrichtung 70 unmittelbar an der Lagerbasis oder in der Lagerbasis 11 oder auch an einem Lagerelement derselben, beispielsweise an einem Fußabschnitt 46 des Lagerkörpers 20, mit dem dieser an dem Lagerabschnitt 18 abgestützt ist. Der Fußabschnitt 46 ist beispielsweise in der Art eines Flanschkörpers ausgestaltet.

Ein Lagerkonzept des Antriebsmotors 50 bzw. der Anhängekupplung 10 sieht vor, dass das Lagerelement 12 beispielsweise anhand des Ringkörpers 12A an dem Lagerkörper 20 gelagert ist. Zudem bildet beispielsweise der Träger 55 ein Lager.

Es ist ohne weiteres möglich, dass der Träger 55 an seinem Außenumfang einen Lagerring eines Wälzlagers, beispielsweise eines Kugellagers oder Rollenlagers, drehbar lagert, der mit dem Lagerelement 12 fest verbunden ist. Somit ist also das Lagerelement 12 einerseits am freien Endbereich des Lagerkörpers 20 als auch an dessen Fußabschnitt im Bereich der Stützfläche 19 drehbar gelagert. Zwischen diesen beiden Lagerorten ist der Antriebsmotor 50 angeordnet.

Somit ist der Innenraum 43 einerseits durch den Träger 55 und andererseits die Stirnwand 42 sowie die Umfangswand 41 verschlossen und bildet somit ein Schutzgehäuse 40 für den Antriebsmotor 50.

Es ist aber auch das Abdichtungskonzept bzw. Verschluss-Konzept, welches bei der Anhängekupplung 110 realisiert ist, bei der Anhängekupplung 10 grundsätzlich realisierbar:
Der Innenraum 43 ist bei der Anhängekupplung 110 durch einen Deckel 44 verschlossen, der eine Durchtrittsöffnung für den Lagerkörper 20, beispielsweise den Fußabschnitt 46 desselben, aufweist. Der Deckel 44 und die Stirnwand 42 begrenzen den Innenraum 43 stirnseitig, die Umfangswand 41 umfangsseitig.

Die Umfangswand 41 begrenzt beispielsweise eine Steckaufnahme, in die der Deckel 44 eingesteckt ist. Der Deckel 44 ist mit der Umfangswand 41 vorteilhaft fest und insbesondere dichtend verbunden, beispielsweise verklebt, verschweißt oder dergleichen.

An dem Deckel 44 können die Formschlusselemente 24 angeordnet sein.

Eine zusätzliche Dichtigkeit, insbesondere in einem Zwischenraum zwischen den Stützflächen 19, 22, wenn diese voneinander in der Entriegelungsstellung der Verriegelungseinrichtung 30 abgerückt sind, wird durch eine Dichtung 45, beispielsweise eine Dichtlippe, eine Ringdichtung oder dergleichen, bereitgestellt, die sich um den Deckel 44 herum erstreckt. Die Dichtung 45 schafft zudem eine Dichtigkeit für den Antriebsmotor 50.

Ein Antriebsmotor 150 der Anhängekupplung 110 bildet ein Lager 113, mit dem das Lagerelement 12 an der Lagerbasis 11 drehbar gelagert ist.

Der Läufer 157 des Antriebsmotors 150 ist an dem Lagerkörper 20 drehbar gelagert. Dazu sind Drehlager 60, 61 vorgesehen, die einerseits an dem wellenartigen Lagerkörpers 20, andererseits an dem Läufer 157 abgestützt sind. Die Drehlager 60, 61 sind beispielsweise Kugellager, Gleitlager, Wälzlager, Rollenlager oder dergleichen.

Der Läufer 157 weist einen Ringkörper 158 auf, an dessen sich um die Drehachse D ringförmig erstreckenden Umfangswand 159 Permanentmagnete 59 angeordnet sind. An einer Bodenwand oder Stirnwand, an deren Außenumfang die Umfangswand 159 angeordnet ist, sind Lageraufnahmen 160, 161 für die Drehlager 60, 61 angeordnet. Das Drehlager 60 weist beispielsweise einen größeren Durchmesser als das Drehlager 61 auf.

Das Lager 113 kann dasjenige Lager sein, mit dem das Lagerelement 12 ausschließlich an der Lagerbasis 11 gelagert ist, d. h. dass kein weiteres Drehlager zwischen dem Lagerelement 12 und der Lagerbasis 11 vorhanden ist.

Es sind aber auch weitere Lagerungen oder Lagerorte möglich:
Eine weitere Lagerung des Lagerelements 12 bezüglich der Lagerbasis 11 der Anhängekupplung 110 kann optional zwischen einerseits dem Deckel 44 und dem Lagerkörper 20, beispielsweise dessen Fußabschnitt 46 realisiert sein.

Ferner ist eine Lagerung im Bereich des hülsenförmigen Trägers 12A zwischen dem Lagerelement 12 und der Lagerbasis 11 ohne weiteres möglich.

An der Lagerbasis 11, insbesondere am Außenumfang des Lagerkörpers 20 ist ein Stator 151 des Antriebsmotors 50 angeordnet. Der Stator 151 weist beispielsweise die bereits erläuterte Erregerspulenanordnung 52 auf.

Es ist möglich, dass der Stator 151 eine Aufnahme aufweist, in die das Drehlager 61 eingreift. Somit ist eine große axiale Stützlänge bezüglich der Drehachse D oder der Motordrehachse des Antriebsmotors 150, mit der der Läufer 157 bezüglich des Stators 151 abgestützt ist, erzielbar. Mithin ist also bei dem Antriebsmotor 150 ein Konzept realisiert, bei dem der Läufer 157 zwar ein Außenläufer ist, der im wesentlichen außenseitig an dem Stator 151 angeordnet ist, dennoch aber in einen Innenraum des Stators 151 eingreift, nämlich im Bereich des Drehlagers 61.

Der Stator 151 stützt sich beispielsweise am Außenumfang eines Wellenabschnitts des Lagerkörpers 20 ab, der vor den Fußabschnitt 46 vorsteht. Stirnseitig kann der Stator 51 an der dem Wellenabschnitt des Lagerkörpers 20 zugewandten Stirnseite des Fußabschnitts 46 abgestützt sein.

Der Antriebsmotor 250 ist ebenso wie der Antriebsmotor 150 in dem von dem Lagerelement 12 gebildeten Schutzgehäuse 40 eingehaust. Ein Innenraum 243 des Lagerelements 12 ist durch einen Deckel 244 in der Art des Deckels 44 abgedichtet, der eine Durchtrittsöffnung oder Eindringöffnung für den Lagerkörper 20, insbesondere dessen Fußabschnitt 246 aufweist. Die Formschlusselemente 23 und die Gegend-Formschlusselemente 24 sind beim Ausführungsbeispiel der Anhängekupplung 210 etwas kleiner ausgestaltet, jedoch funktional identisch mit den vorigen Ausführungsbeispielen.

Am Außenumfang des Fußabschnitts 246 ist ein Drehlager 261 abgestützt, an einem von dem Fußabschnitt 246 abstehenden Wellenabschnitt des Lagerkörpers 20 ist ein Drehlager 260 abgestützt. Zwischen den Drehlagern 261, 260 ist der Stator 251, der beispielsweise die Erregerspulenanordnung 52 aufweist, die über eine bei der Anhängekupplung 210 zur Vereinfachung nicht dargestellten Bestromungseinrichtung in der Art der Bestromungseinrichtung 70 bestrombar ist.

Die Drehlager 260, 261 lagern den Läufer 257, also einen Rotor, des Antriebsmotors 250 bezüglich seiner Motordrehachse oder Drehachse D drehbar. Der Läufer oder Rotor 257 weist einen Ringkörper 258 mit einer Umfangswand 259 auf, an der eine Anordnung mehrerer Permanentmagnete 59 angeordnet ist, die sich ringförmig um die Drehachse D erstrecken. Die Umfangswand 259 ist einerseits an dem Drehlager 261, andererseits mit einer sich von der Umfangswand 259 weg erstreckenden Stirnwand an dem Drehlager 260 abgestützt. Dadurch sind der Stator 251 und somit auch die Erregerspulenanordnung 52 durch die Drehlager 260, 261 und die Umfangswand 259 sowie einen Teil der vorgenannten Stirnwand eingehaust.

Die Antriebe 50, 150, 250 sind Direktantriebe, die das Lagerelement 12 bezüglich der Lagerbasis 11 unmittelbar, also ohne ein zwischengeschaltetes Getriebe, antreiben.

Bei der Anhängekupplung 310 hingegen ist ein Getriebe 80 vorgesehen, über welches deren Antriebsmotor 350 das Lagerelement 12 um die Drehachse D antreibt.

Das Getriebe 80 und der Antriebsmotor 350 sind in dem Lagerelement 12 vollständig eingehaust, also gegen Umwelteinflüsse geschützt. Dieses Konzept wurde bereits erläutert und wird beispielsweise dadurch realisiert, dass der Innenraum 41 des Lagerelements 12 durch einen Deckel 344 in der Art der Deckel 44, 244, verschlossen ist.

Das Getriebe 80 ist vorliegend als Planetengetriebe ausgestaltet.

Der Stator 351 des Antriebsmotors 350 ist an der Lagerbasis 11 ortsfest angeordnet. Beispielsweise ist eine Erregerspulenanordnung 352 in der Art der Erregerspulenanordnung 52 am Wellenabschnitt des Lagerkörpers 20 angeordnet. An diesem kann beispielsweise direkt ein Blechpaket mit mehreren Erregerspulen in der Art der Erregerspulen 53 vorgesehen sein, die durch eine Bestromungseinrichtung 70 bestrombar sind.

Die Bestromungseinrichtung 70 ist in einer Kavität 73 eines Fußabschnitts 346 des Lagerkörpers 20 angeordnet. Von der Kavität 73 erstreckt sich beispielsweise ein Leitungskanal 74 durch die Lagerplatte oder den Lagerabschnitt 18 der Lagerbasis 11 hindurch, durch welchen elektrische Leitungen, beispielsweise zur Stromversorgung der Bestromungseinrichtung 70, zu deren Ansteuerung oder dergleichen, führen können.

Ein Läufer 357 und somit ein Rotor des Antriebsmotors 350 ist drehbar bezüglich des Lagerelements 12 gelagert, nämlich anhand eines Drehlagers 87.

Der Läufer 357 trägt oder bildet zugleich ein Sonnenrad 81 des Getriebes 80 oder ist an dem Sonnenrad 81 angeordnet. Das Sonnenrad 81 bildet ein Getrieberad 81A des Getriebes 80.

Das Sonnenrad 81 kämmt mit einem oder mehreren Planetenrädern 83 eines Planetenradsatzes 82, der an einem Planetenträger 85 drehbar gelagert ist, nämlich anhand von Lagerelementen 84, beispielsweise Lagerwellen. An den Lagerelementen 84 können Wälzlager, beispielsweise Nadellager, Kugellager, Rollenlager oder dergleichen vorgesehen sein, mit denen die Planetenräder 83 gelagert sind. Selbstverständlich können auch die Lagerelemente 84 drehbar bezüglich des Planetenträgers 85 gelagert sein, beispielsweise anhand von Gleitlagern, Wälzlager oder dergleichen.

Der Planetenträger 85 ist ortsfest an der Lagerbasis 11 angeordnet. Beispielsweise sind die Lagerelemente 84 am Fußabschnitt 346 des Lagerkörpers 20 angeordnet. Der Fußabschnitt 346 kann beispielsweise den Planetenträger 85 bilden.

Die Drehachsen der Planetenräder 83 sind parallel zur Drehachse D, um die das Lagerelement 12 bezüglich der Lagerbasis 11 drehbar gelagert ist.

Die Lagerelemente 84 stehen beispielsweise vor eine dem Wellenabschnitt des Lagerkörpers 20 zugewandte Stirnseite des Fußabschnitts 346 vor.

Die Planetenräder 83 wiederum kämmen mit einem Hohlrad 86, welches an dem Lagerelement 12 angeordnet oder von dem Lagerelement 12 gebildet ist. Beispielsweise ist das Hohlrad 86 an einer dem Lagerkörper 20 zugewandten Innenseite oder inneren Wandfläche der Umfangswand 41 angeordnet oder ausgebildet.

Bei den vorgenannten Ausführungsbeispielen ist die Lagerbasis 11 eine Stator-Antriebskomponente 111, an der der jeweilige Stator 51, 151, 251, 351 der Antriebsmotoren 50-350 angeordnet ist, während der Läufer 57, 157, 257, 357 an dem eine Läufer-Antriebskomponente 112 bildenden Lagerelement 12 angeordnet ist.

Es ist aber ohne weiteres auch eine Art Gestaltumkehr derart möglich, dass beispielsweise bei der Anhängekupplung 110 anstelle der Erregerspulenanordnung 52 eine Magnetanordnung 59B an der Lagerbasis 11 angeordnet ist, während an dem Lagerelement 12 Erregerspulenanordnung 52B angeordnet ist, die durch die Bestromungseinrichtung 70 bestrombar ist, beispielsweise über eine Versorgungsleitung 171. Die Versorgungsleitung 171 macht die Bewegungen des Lagerelements 12 bezüglich der Lagerbasis 11 mit.

Die Antriebsmotoren 50-350 können nicht nur als Drehantriebe ausgestaltet sein, sondern auch als Linearantriebe, beispielsweise um das Lagerelement 12 bezüglich der Lagerbasis 11 entlang der Stellachse S zu verstellen.

Dabei ist es möglich, dass die Antriebsmotoren 50-350 diese Linearbewegung sequenziell zu der bereits beschriebenen Drehbewegung realisieren, beispielsweise um die Formschlusselemente 23-24 außer Eingriff und in Eingriff zu bringen, aber auch überlagerte Dreh- und Linearbewegungen realisieren, beispielsweise zur Verstellung des Kuppelelements 14 zwischen der Ruhestellung R und der Gebrauchsstellung G.

## Patentansprüche

1. Anhängekupplung für ein Kraftfahrzeug (90) mit einem Kuppelelement (14), welches anhand eines Lagers (13) zwischen einer Gebrauchsstellung (G), in der es zum Anhängen eines Anhängers nach hinten vor ein Heck (91) des Kraftfahrzeugs (90) vorsteht, und einer Ruhestellung (R), in der es näher zu dem Kraftfahrzeug (90) hin verstellt ist, verstellbar gelagert ist, wobei das Lager (13) eine bezüglich des Kraftfahrzeugs (90) ortsfeste Lagerbasis (11) und ein an der Lagerbasis (11) beweglich gelagertes Lagerelement (12) aufweist, welches das Kuppelelement (14) trägt, wobei die Anhängekupplung (10) einen elektrischen Antriebsmotor (50) aufweist, mit dem das Lagerelement (12) bezüglich der Lagerbasis (11) zwischen der Ruhestellung (R) und der Gebrauchsstellung (G) antreibbar ist, und wobei der Antriebsmotor (50) einen Stator (51) und einen bezüglich des Stators (51) angetriebenen Läufer (57) aufweist, wobei die Lagerbasis (11) und das Lagerelement (12) Antriebskomponenten bilden, wobei der Stator (51) an der einen, eine Stator-Antriebskomponente (111) bildende Antriebskomponente und der Läufer (57) an der anderen, eine Läufer-Antriebskomponente (112) bildende Antriebskomponente angeordnet ist, **dadurch gekennzeichnet, dass** der Läufer (57) an der Läufer-Antriebskomponente (112), insbesondere an dem Lagerelement (12), ortsfest angeordnet ist oder dass der Läufer (57) an der Läufer-Antriebskomponente (112), insbesondere dem Lagerelement (12), beweglich angeordnet, insbesondere drehbar gelagert, ist, wobei der Läufer (57) mit der Läufer-Antriebskomponente (112), insbesondere dem Lagerelement (12), anhand mindestens eines Getriebeelements eines Getriebes (80) bewegungsgekoppelt ist, anhand dessen der Läufer (57) die Läufer-Antriebskomponente (112), insbesondere das Lagerelement (12), antreibt und der Läufer (57) an einem Getrieberad (81A), insbesondere einem Sonnenrad (81), des Getriebes (80) angeordnet ist oder ein Getrieberad (81A) des Getriebes (80) bildet.

2. Anhängekupplung (10) nach Anspruch 1, **dadurch gekennzeichnet, dass** der Läufer (57) die Läufer-Antriebskomponente (112), insbesondere das Lagerelement (12), ohne ein zwischengeschaltetes Getriebe (80) und/oder direkt antreibt.

3. Anhängekupplung nach Anspruch 1, **dadurch gekennzeichnet, dass** das Getriebe (80) ein Planetengetriebe ist oder umfasst und/oder dass das mindestens eine Getriebeelement ein Planetenrad umfasst oder dadurch gebildet ist und/oder dass der Läufer (57) ein Sonnenrad (81) umfasst oder dadurch gebildet ist.

4. Anhängekupplung nach einem der vorhergehenden Ansprüche, **dadurch gekennzeichnet, dass** der Läufer (57) einen Rotor (57A) bildet, der bezüglich des Stators (51) um eine Drehachse (D) antreibbar ist und/oder dass der Läufer (57) einen Linear-Läufer (57) bildet, der bezüglich des Stators (51) entlang einer Längsachse antreibbar ist, und/oder dass der Läufer (57) einen Außenläufer (57) bildet, in dessen Innenraum der Stator (51) angeordnet ist, oder der Läufer (57) in einem Innenraum des Stators (51) angeordnet ist.

5. Anhängekupplung nach einem der vorhergehenden Ansprüche, **dadurch gekennzeichnet, dass** das Lagerelement (12) bezüglich der Lagerbasis (11) um eine Drehachse (D) anhand von mindestens zwei bezüglich der Drehachse (D) in einem Längsabstand angeordneten Drehlagern gelagert ist, zwischen denen der Stator (51) angeordnet ist, und/oder dass das Lagerelement (12) bezüglich der Lagerbasis (11) um eine Drehachse (D) drehbar gelagert ist und/oder dass das Lagerelement (12) bezüglich der Lagerbasis (11) entlang einer Stellachse (S) insbesondere linear verschieblich gelagert ist, wobei vorteilhaft vorgesehen ist, dass die Stellachse (S) und die Drehachse (D) koaxial oder identisch sind.

6. Anhängekupplung nach einem der vorhergehenden Ansprüche, **dadurch gekennzeichnet, dass** sie eine Verriegelungseinrichtung (30) aufweist, mit der das Lagerelement (12) bezüglich der Lagerbasis (11) in der Gebrauchsstellung (G) und/oder der Ruhestellung (R) verriegelbar und/oder ortsfest fixierbar ist.

7. Anhängekupplung nach Anspruch 6, **dadurch gekennzeichnet, dass** der Läufer (57) bezüglich des Stators (51) in mindestens einer zur Verriegelung durch die Verriegelungseinrichtung (30) vorgesehenen Relativposition des Lagerelements (12) bezüglich der Lagerbasis (11) ein die Verriegelung und Entriegelung ermöglichendes Bewegungsspiel aufweist, wobei vorteilhaft vorgesehen ist, dass das Bewegungsspiel ein lineares Bewegungsspiel entlang einer Drehachse (D) ist, um die das Lagerelement (12) bezüglich der Lagerbasis (11) drehbar gelagert ist.

8. Anhängekupplung nach einem der Ansprüche 6 oder 7, **dadurch gekennzeichnet, dass** der Antriebsmotor (50), insbesondere der Stator (51), von mindestens einer Komponente der Verriegelungseinrichtung (30), insbesondere einem Betätigungskörper (31) zur Betätigung von mindestens einem Verriegelungskörper (32) oder Formschlusselement, durchsetzt ist oder einen Aufnahmeraum für die Komponente der Verriegelungseinrichtung (30) aufweist und/oder dass der Antriebsmotor (50) und/oder ein von dem Antriebsmotor (50) angetriebenes Getriebe (80) zum Antreiben des Lagerelements (12) bezüglich der Lagerbasis (11) zwischen das Lagerelement (12) bezüglich der Lagerbasis (11) drehfest und/oder verschiebefest verriegelnden Verriegelungskomponenten (32, 23, 24) der Verriegelungseinrichtung (30) angeordnet ist und/oder dass die Verriegelungseinrichtung (30) mindestens ein an der Lagerbasis (11) insbesondere ortsfest angeordnetes Formschlusselement (23) und mindestens ein an dem Lagerelement (12) insbesondere ortsfest angeordnetes Gegen-Formschlusselement (24) aufweist, die durch axiale Verstellung des Lagerelements (12) entlang einer Drehachse (D), um die das Lagerelement (12) bezüglich der Lagerbasis (11) drehbar gelagert ist, zwischen einer Fixierstellung, in der das mindestens eine Formschlusselement (23) und das mindestens eine Gegen-Formschlusselement (24) in Eingriff sind, und einer Lösestellung, in der das mindestens eine Formschlusselement (23) und das mindestens eine Gegen-Formschlusselement (24) außer Eingriff sind, verstellbar sind, wobei das Lagerelement (12) relativ zu der Lagerbasis (11) bezüglich der Drehachse (D) in der Fixierstellung drehfest fixiert und in der Lösestellung drehbar ist, und/oder dass die Verriegelungseinrichtung (30) mindestens ein mit einer radialen Bewegungskomponente zu einer Drehachse (D), um die das Lagerelement (12) bezüglich der Lagerbasis (11) drehbar ist, betätigbares Formschlusselement (32A) aufweist, welches zwischen einer Fixierstellung, in der das Lagerelement (12) bezüglich der Lagerbasis (11) drehfest fixiert ist und in der das Formschlusselement (32A) mit mindestens einem Gegen-Formschlusselement (33A) in Eingriff ist, und einer Lösestellung verstellbar ist, in der das Lagerelement (12) bezüglich der Lagerbasis (11) drehbar ist und das mindestens eine Formschlusselement (32A) außer Eingriff mit dem mindestens einen Gegen-Formschlusselement (33A) ist.

9. Anhängekupplung nach einem der vorhergehenden Ansprüche, **dadurch gekennzeichnet, dass** der Stator (51) eine Erregerspulenanordnung (52) oder Statorspulenanordnung aufweist und/oder dass der Läufer (57) eine Magnetanordnung aufweist oder ein Kurzschlussläufer (57) ist und/oder dass der Antriebsmotor (50) ein elektronisch kommutierter Antriebsmotor (50) und/oder ein bürstenloser Motor ist und/oder dass die Stator-Antriebskomponente (111), insbesondere die Lagerbasis (11), einen Aufnahmeraum für eine Bestromungseinrichtung (70) zum Bestromen des Antriebsmotors (50) aufweist und/oder ein Schutzgehäuse (40) für eine Bestromungseinrichtung (70) zum Bestromen des Antriebsmotors (50) bildet und/oder dass die Stator-Antriebskomponente (111), insbesondere die Lagerbasis (11), den Stator und/oder dass die Läufer-Antriebskomponente (112), insbesondere das Lagerelement (12), den Läufer (57) kapselt und/oder dass der Antriebsmotor (50) in dem Lager (13) eingehaust ist oder das Lager, insbesondere das Lagerelement (12), ein Schutzgehäuse (40) für den Antriebsmotor (50) bildet.

10. Anhängekupplung nach einem der vorhergehenden Ansprüche, **dadurch gekennzeichnet, dass** der Läufer (57) bezüglich des Stators (51) anhand einer Lageranordnung drehbar gelagert ist, wobei die Lageranordnung das Lager (13), mit dem das Lagerelement (12) an der Lagerbasis (11) drehbar gelagert ist, ganz oder teilweise bildet, und/oder dass eine Drehachse (D) des Antriebsmotors (50) und eine Drehachse (D), um die das Lagerelement (12) bezüglich der Lagerbasis (11) drehbar gelagert ist, koaxial oder parallel sind und/oder dass der Antriebsmotor (50) und/oder ein Getriebe (80), über das der Antriebsmotor (50) das Lagerelement (12) antreibt, zwischen der Lagerbasis (11) und einer von der Lagerbasis (11) abgewandten Stirnwand oder Stirnseite des Lagerelements (12) angeordnet ist.

11. Anhängekupplung nach einem der vorhergehenden Ansprüche, **dadurch gekennzeichnet, dass** der Antriebsmotor (50) und/oder ein Getriebe (80), über das der Antriebsmotor (50) das Lagerelement (12) antreibt, in einem durch das Lagerelement (12) gebildeten oder an dem Lagerelement (12) angeordneten Schutzgehäuse (40) aufgenommen sind, und/oder dass das Lagerelement (12) bezüglich der Lagerbasis (11) ausschließlich anhand von Lagern (60, 61) des Antriebsmotors (50) drehbar gelagert ist und/oder dass der Läufer (57) mit dem Stator (51) durch Montage des Lagerelements (12) an der Lagerbasis (11) in Eingriff bringbar oder in Eingriff gebracht ist.

12. Anhängekupplung nach einem der vorhergehenden Ansprüche, **dadurch gekennzeichnet, dass** der Stator (51) an einem das Lagerelement (12) um eine Drehachse (D) drehbar lagernden Lagerkörper (20), insbesondere einem Wellenkörper (20A), angeordnet ist, wobei vorteilhaft vorgesehen ist, dass der Lagerkörper (20) vor den Stator (51) vorsteht und/oder den Stator (51) durchdringt und/oder dass der Stator (51) ringförmig um den Lagerkörper (20) angeordnet ist und/oder dass in dem Lagerkörper (20) ein Betätigungskörper (31) einer Verriegelungseinrichtung (30), die zum ortsfesten Fixieren oder Verriegeln des Lagerelements (12) bezüglich der Lagerbasis (11) in der Gebrauchsstellung (G) und/oder der Ruhestellung (R) vorgesehen ist, beweglich, insbesondere linear verschieblich, aufgenommen ist.

13. Anhängekupplung nach einem der vorhergehenden Ansprüche, **dadurch gekennzeichnet, dass** das Lagerelement (12) und der Antriebsmotor (50) an derselben Seite der Lagerbasis (11) angeordnet sind.

14. Anhängekupplung nach einem der vorhergehenden Ansprüche, **dadurch gekennzeichnet, dass** der Läufer (57) in einem Innenraum eines insbesondere ortsfest am Lagerelement (12) angeordneten Getrieberads, insbesondere eines Hohlrads (86), angeordnet ist.

## Claims

1. Trailer coupling for a motor vehicle (90) having a coupling element (14), which is mounted by means of a bearing (13) so as to be movable between a usage position (G) in which for attachment of a trailer the coupling element projects rearwards in front of the rear (91) of the motor vehicle (90), and a rest position (R), in which the coupling element is moved closer to the motor vehicle (90), wherein the bearing (13) has a bearing base (11) which is stationary relative to the motor vehicle (90) and a bearing element (12) which is movably mounted on the bearing base (11), and supports the coupling element (14), wherein the trailer coupling (10) has an electric drive motor (50) by which the bearing element (12) can be driven relative to the bearing base (11) between the rest position (R) and the usage position (G), and wherein the drive motor (50) has a stator (51) and an armature (57) that is driven relative to the stator (51), wherein the bearing base (11) and the bearing element (12) form drive components, wherein the stator (51) is arranged on one drive component forming a stator drive component (111) and the armature (57) is arranged on the other drive component forming an armature drive component (112), **characterised in that** the armature (57) is mounted in a stationary manner on the armature drive component (112), in particular on the bearing element (12), or that the armature (57) is movably mounted on the armature drive component (112), in particular on the bearing element (12), in particular rotatably, wherein the armature (57) is movably coupled to the armature drive component (112), in particular the bearing element (12), by means of at least one gear element of a gear (80), by means of which the armature (57) drives the armature drive component (112), in particular the bearing element (12) and the armature (57) is arranged on a gear wheel (81A), in particular a sun wheel (81), of a gear (80) or forms a gear wheel (81A) of a gear (80).

2. Trailer coupling (10) according to claim 1, **characterised in that** the armature (57) drives the armature drive component (112), in particular the bearing element (12), without an intermediate gear (80) and/or directly.

3. Trailer coupling (10) according to claim 1, **characterised in that** the gear (80) is or comprises a planetary gear and/or in that the at least one gear element comprises or is formed by a planet gear and/or **in that** the armature (57) comprises or is formed by a sun wheel (81).

4. Trailer coupling according to any one of the preceding claims, **characterised in that** the armature (57) forms a rotor (57A), which with respect to the stator (51) is driveable about a rotational axis (D) and/or **in that** the armature (57) forms a linear armature (57), which with respect to of the stator (51) is driveable along a longitudinal axis, and/or **in that** the armature (57) forms an outer armature (57), in the interior of which the stator (51) is arranged, or the armature (57) is arranged in an interior of the stator (51).

5. Trailer coupling according to any one of the preceding claims, **characterised in that** the bearing element (12) with respect to the bearing base (11) is mounted rotatably about a rotational axis (D) by means of at least two rotary bearings arranged at a longitudinal distance with respect to the rotational axis (D), between which a stator (51) is arranged, and/or **in that** the bearing element (12) in relation to the bearing base (11) is rotatably mounted about a rotational axis (D) and/or **in that** the bearing element (12) in relation to the bearing base (11) is mounted displaceably along a setting axis (S) in particular linearly, wherein it is advantageously provided that the setting axis (S) and the rotational axis (D) are coaxial or identical.

6. Trailer coupling according to any one of the preceding claims, **characterised in that** it has a locking device (30), with which the bearing element (12) with respect to the bearing base (11) is lockable or fixable in a stationary manner in the usage position (G) and/or the rest position (R).

7. Trailer coupling according to claim 6, **characterised in that** the armature (57) with respect to the stator (51) in at least a relative position of the bearing element (12) with respect to the bearing base (11) provided for locking by the locking device (30) has a movement play allowing the locking and unlocking , wherein it is advantageously provided that the movement play is a linear movement play along a rotational axis (D), about which the bearing element (12) with respect to the bearing base (11) is rotatably mounted.

8. Trailer coupling according to any one of claims 6 or 7, **characterised in that** the drive motor (50), in particular the stator (51), is passed through by at least one component of the locking device (30), in particular an actuating body (31) for actuating at least one locking body (32) or positive-locking element, or has a receiving space for the component of the locking device (30) and/or **in that** the drive motor (50) and/or a gear (80) driven by the drive motor (50) for driving the bearing element (12) with respect to the bearing base (11) is arranged between the bearing element (12) with respect to the locking components (32,23,24) of the locking device (30) locking the bearing base (11) in a non-rotatable and/or non-displaceable manner and/or **in that** the locking device (30) has at least one positive-locking element (23) arranged in particular in a stationary manner on the bearing base (11) and at least one mating positive-locking element (24) arranged in particular in a stationary manner on the bearing element (12), which through axial displacement of the bearing element (12) along a rotational axis (D), about which the bearing element (12) is rotatably mounted with respect to the bearing base (11), can be displaced between a fixing position, in which the at least one positive-locking element (23) and the at least one mating positive-locking element (24) are in engagement, and a release position, in which the at least one positive-locking element (23) and the at least one mating positive-locking element (24) are out of engagement, wherein the bearing element (12) relative to the bearing base (11) with respect to the rotational axis (D) is fixed against rotation in the fixing position and in the release position is rotatable, and/or **in that** the locking device (30) has at least one actuable positive-locking element (32A) with a movement component radial to a rotational axis (D), about which the bearing element (12) is rotatable with respect to the bearing base (11), which is adjustable between a fixing position, in which the bearing element (12) with respect to the bearing base (11) is rotationally fixed and in which the positive-locking element (32A) is in engagement with at least one mating positive-locking element (33A), and a release position, in which the bearing element (12) with respect to the bearing base (11) is rotatable and the at least one positive-locking element (32A) is out of engagement with the at least one mating positive-locking element (33A).

9. Trailer coupling according to any one of the preceding claims, **characterised in that** the stator (51) has an exciter coil arrangement (52) or stator coil arrangement and/or **in that** the armature (57) has an exciter coil arrangement or is a squirrel-cage armature (57) and/or **in that** the drive motor (50) is an electronically switched drive motor (50) and/or a brushless motor and/or **in that** the stator drive component (111), in particular the bearing base (11), has a receiving space for a power supply device (70) for supplying power to the drive motor (50) and/or forms a protective housing (40) for a power supply device (70) for supplying power to the drive motor (50) and/or **in that** the stator-drive component (111), in particular the bearing base (11), encloses the stator, and/or **in that** the armature drive component (112), in particular the bearing element (12), encloses the armature (57) and/or **in that** the drive motor (50) is housed in the bearing (13) or the bearing, in particular the bearing element (12), forms a protective housing (40) for the drive motor (50) .

10. Trailer coupling according to any one of the preceding claims, **characterised in that** the armature (57) with respect to the stator (51) by means of a bearing arrangement is rotatably mounted, wherein the bearing arrangement forms in full or in part the bearing (13), with which the bearing element (12) is rotatably mounted on the bearing base (11), and/or **in that** a rotational axis (D) of the drive motor (50) and a rotational axis (D), about which the bearing element (12) is rotatably mounted with respect to the bearing base (11), are coaxial or parallel and/or **in that** the drive motor (50) and/or a gear (80), via which the drive motor (50) drives the bearing element (12), is arranged between the bearing base (11) and an end wall or end face of the bearing element (12) facing away from the bearing base (11).

11. Trailer coupling according to any one of the preceding claims, **characterised in that** the drive motor (50) and/or a gear (80), via which the drive motor (50) drives the bearing element (12), are received in a protective housing (40) formed by the bearing element (12) or arranged on the bearing element (12) and/or **in that** the bearing element (12) in relation to the bearing base (11) is exclusively rotatably mounted by means of bearings (60, 61) of the drive motor (50) and/or **in that** the armature (57) can be or is brought into engagement with the stator (51) through mounting of the bearing element (12) on the bearing base (11).

12. Trailer coupling according to any one of the preceding claims, **characterised in that** the stator (51) is arranged on a bearing body (20) rotatably mounting the bearing element (12) about a rotational axis (D), in particular a shaft body (20A), wherein it is advantageously provided that the bearing body (20) protrudes from the stator (51) and/or passes through the stator (51) and/or **in that** the stator (51) is arranged in a circular manner about the bearing body (20) and/or **in that** in the bearing body (20) an actuating body (31) of a locking device (30), that is provided for stationary fixing or locking of the bearing element (12) with respect to the bearing base (11) in the usage position (G) and/or the rest position (R), is received, in particular in a linearly displaceable manner.

13. Trailer coupling according to any one of the preceding claims, **characterised in that** the bearing element (12) and the drive motor (50) are arranged on the same side of the bearing base (11).

14. Trailer coupling according to any one of the preceding claims, **characterised in that** the armature (57) is arranged in an interior of a gear wheel, in particular arranged in a stationary manner on the bearing element (12), in particular a hollow wheel (86).

## Revendications

1. Attelage de remorque pour un véhicule à moteur (90) avec un élément d'attelage (14), lequel est monté de manière à pouvoir être ajusté à l'aide d'un palier (13) entre une position d'utilisation (G), dans laquelle il fait saillie vers l'arrière devant une partie arrière (91) du véhicule à moteur (90) pour atteler une remorque, et une position de repos (R), dans laquelle il est ajusté davantage à proximité en direction du véhicule à moteur (90), dans lequel le palier (13) présente une base de palier (11) stationnaire par rapport au véhicule à moteur (90) et un élément de palier (12) monté de manière mobile sur la base de palier (11), lequel supporte l'élément d'attelage (14), dans lequel l'attelage de remorque (10) présente un moteur d'entraînement (50) électrique, avec lequel l'élément de palier (12) peut être entraîné par rapport à la base de palier (11) entre la position de repos (R) et la position d'utilisation (G), et dans lequel le moteur d'entraînement (50) présente un stator (51) et un induit (57) entraîné par rapport au stator (51), dans lequel la base de palier (11) et l'élément de palier (12) forment des composants d'entraînement, dans lequel le stator (51) est disposé sur le composant d'entraînement formant un composant d'entraînement de stator (111) et l'induit (57) est disposé sur l'autre composant d'entraînement formant un composant d'entraînement d'induit (112), **caractérisé en ce que** l'induit (57) est disposé de manière stationnaire sur le composant d'entraînement d'induit (112), en particulier sur l'élément de palier (12), ou que l'induit (57) est disposé de manière mobile, en particulier est monté de manière à pouvoir tourner, sur le composant d'entraînement d'induit (112), en particulier sur l'élément de palier (12), dans lequel l'induit (57) est couplé en déplacement au composant d'entraînement d'induit (112), en particulier à l'élément de palier (12), à l'aide d'au moins un élément d'engrenage d'un engrenage (80), à l'aide duquel l'induit (57) entraîne le composant d'entraînement d'induit (112), en particulier l'élément de palier (12) et l'induit (57) est disposé sur une roue d'engrenage (81A), en particulier une roue solaire (81), de l'engrenage (80) ou forme une roue d'engrenage (81A) de l'engrenage (80).

2. Attelage de remorque (10) selon la revendication 1, **caractérisé en ce que** l'induit (57) entraîne sans un engrenage (80) intercalé et/ou directement le composant d'entraînement d'induit (112), en particulier l'élément de palier (12).

3. Attelage de remorque selon la revendication 1, **caractérisé en ce que** l'engrenage (80) est ou comprend un engrenage planétaire, et/ou que l'au moins un élément d'engrenage comprend une roue planétaire ou en est formé, et/ou que l'induit (57) comprend une roue solaire (81) ou en est formé.

4. Attelage de remorque selon l'une quelconque des revendications précédentes, **caractérisé en ce que** l'induit (57) forme un rotor (57A), qui peut être entraîné autour d'un axe de rotation (D) par rapport au stator (51), et/ou que l'induit (57) forme un induit linéaire (57), qui peut être entraîné le long d'un axe longitudinal par rapport au stator (51), et/ou que l'induit (57) forme un induit extérieur (57), dans l'espace intérieur duquel le stator (51) est disposé, ou l'induit (57) est disposé dans un espace intérieur du stator (51).

5. Attelage de remorque selon l'une quelconque des revendications précédentes, **caractérisé en ce que** l'élément de palier (12) est monté à l'aide d'au moins deux paliers rotatifs disposés à une distance longitudinale par rapport à l'axe de rotation (D) autour d'un axe de rotation (D) par rapport à la base de palier (11), entre lesquels le stator (51) est disposé, et/ou que l'élément de palier (12) est monté de manière à pouvoir tourner autour d'un axe de rotation (D) par rapport à la base de palier (11), et/ou que l'élément de palier (12) est monté de manière à pouvoir coulisser en particulier linéairement le long d'un axe de réglage (S) par rapport à la base de palier (11), dans lequel il est avantageusement prévu que l'axe de réglage (S) et l'axe de rotation (D) sont coaxiaux ou identiques.

6. Attelage de remorque selon l'une quelconque des revendications précédentes, **caractérisé en ce qu'**il présente un dispositif de verrouillage (30), avec lequel l'élément de palier (12) peut être verrouillé et/ou peut être bloqué de manière stationnaire dans la position d'utilisation (G) et/ou dans la position de repos (R) par rapport à la base de palier (11).

7. Attelage de remorque selon la revendication 6, **caractérisé en ce que** l'induit (57) présente un jeu de déplacement permettant le verrouillage et le déverrouillage par rapport au stator (51) dans au moins une position relative, prévue pour le verrouillage par le dispositif de verrouillage (30), de l'élément de palier (12) par rapport à la base de palier (11), dans lequel il est avantageusement prévu que le jeu de déplacement est un jeu de déplacement linéaire le long d'un axe de rotation (D), autour duquel l'élément de palier (12) est monté de manière à pouvoir tourner par rapport à la base de palier (11).

8. Attelage de remorque selon l'une quelconque des revendications 6 ou 7, **caractérisé en ce que** le moteur d'entraînement (50), en particulier le stator (51), est traversé par au moins un composant du dispositif de verrouillage (30), en particulier par un corps d'actionnement (31) pour actionner au moins un corps de verrouillage (32) ou un élément à complémentarité de forme ou présente un espace de logement pour le composant du dispositif de verrouillage (30), et/ou que le moteur d'entraînement (50) et/ou un engrenage (80) entraîné par le moteur d'entraînement (50) sont disposés entre des composants de verrouillage (32, 23, 24) verrouillant de manière solidaire en rotation et/ou de manière solidaire en coulissement l'élément de palier (12) par rapport à la base de palier (11) pour entraîner l'élément de palier (12) par rapport à la base de palier (11), et/ou que le dispositif de verrouillage (30) présente au moins un élément à complémentarité de forme (23) disposé sur la base de palier (11), en particulier de manière stationnaire et au moins un contre-élément à complémentarité de forme (24) disposé en particulier de manière stationnaire sur l'élément de palier (12), lesquels peuvent être ajustés par ajustement axial de l'élément de palier (12) le long d'un axe de rotation (D), autour duquel l'élément de palier (12) est monté de manière à pouvoir tourner par rapport à la base de palier (11), entre une position de blocage, dans laquelle l'au moins un élément à complémentarité de forme (23) et l'au moins un contre-élément à complémentarité de forme (24) sont en prise, et une position de déblocage, dans laquelle l'au moins un élément à complémentarité de forme (23) et l'au moins un contre-élément à complémentarité de forme (24) ne sont pas en prise, dans lequel l'élément de palier (12) est bloqué par rapport à la base de palier (11) de manière solidaire en rotation dans la position de blocage par rapport à l'axe de rotation (D) et peut être tourné dans la position de déblocage, et/ou que le dispositif de verrouillage (30) présente au moins un élément à complémentarité de forme (32A) pouvant être actionné avec un composant de déplacement radial par rapport à un axe de rotation (D), autour duquel l'élément de palier (12) peut être tourné par rapport à la base de palier (11), lequel peut être ajusté entre une position de blocage, dans laquelle l'élément de palier (12) est bloqué de manière solidaire en rotation par rapport à la base de palier (11) et dans laquelle l'élément à complémentarité de forme (32A) est en prise avec au moins un contre-élément à complémentarité de forme (33A), et une position de déblocage, dans laquelle l'élément de palier (12) peut être tourné par rapport à la base de palier (11) et l'au moins un élément à complémentarité de forme (32A) n'est pas en prise avec l'au moins un contre-élément à complémentarité de forme (33A).

9. Attelage de remorque selon l'une quelconque des revendications précédentes, **caractérisé en ce que** le stator (51) présente un ensemble de bobines d'excitation (52) ou un ensemble de bobines de stator, et/ou que l'induit (57) présente un ensemble magnétique ou est un induit en court-circuit (57), et/ou que le moteur d'entraînement (50) est un moteur d'entraînement (50) commuté de manière électronique et/ou un moteur sans balai, et/ou que le composant d'entraînement de stator (111), en particulier la base de palier (11), présente un espace de logement pour un dispositif d'alimentation électrique (70) destiné à alimenter électriquement le moteur d'entraînement (50) et/ou forme un boîtier de protection (40) pour un dispositif d'alimentation électrique (70) destiné à alimenter électriquement le moteur d'entraînement (50), et/ou que le composant d'entraînement de stator (111), en particulier la base de palier (11), encapsule le stator et/ou que le composant d'entraînement d'induit (112), en particulier l'élément de palier (12), encapsule l'induit (57), et/ou que le moteur d'entraînement (50) est abrité dans le palier (13) ou le palier, en particulier l'élément de palier (12), forme un boîtier de protection (40) pour le moteur d'entraînement (50).

10. Attelage de remorque selon l'une quelconque des revendications précédentes, **caractérisé en ce que** l'induit (57) est monté de manière à pouvoir tourner à l'aide d'un ensemble formant palier par rapport au stator (51), dans lequel l'ensemble formant palier forme en totalité ou en partie le palier (13), avec lequel l'élément de palier (12) est monté de manière à pouvoir tourner sur la base de palier (11), et/ou qu'un axe de rotation (D) du moteur d'entraînement (50) et un axe de rotation (D), autour duquel l'élément de palier (12) est monté de manière à pouvoir tourner par rapport à la base de palier (11), sont coaxiaux ou parallèles, et/ou que le moteur d'entraînement (50) et/ou un engrenage (80), par l'intermédiaire duquel le moteur d'entraînement (50) entraîne l'élément de palier (12), sont disposés entre la base de palier (11) et une paroi frontale ou un côté frontal, opposée ou opposé à la base de palier (11), de l'élément de palier (12).

11. Attelage de remorque selon l'une quelconque des revendications précédentes, **caractérisé en ce que** le moteur d'entraînement (50) et/ou un engrenage (80), par l'intermédiaire duquel le moteur d'entraînement (50) entraîne l'élément de palier (12), sont logés dans un boîtier de protection (40) formé par l'élément de palier (12) ou disposé sur l'élément de palier (12), et/ou que l'élément de palier (12) est monté de manière à pouvoir tourner par rapport à la base de palier (11) exclusivement à l'aide de paliers (60, 61) du moteur d'entraînement (50), et/ou que l'induit (57) peut être amené en prise ou est amené en prise avec le stator (51) par le montage de l'élément de palier (12) sur la base de palier (11).

12. Attelage de remorque selon l'une quelconque des revendications précédentes, **caractérisé en ce que** le stator (51) est disposé sur un corps de palier (20) supportant l'élément de palier (12) de manière à pouvoir tourner autour d'un axe de rotation (D), en particulier un corps ondulé (20A), dans lequel il est avantageusement prévu que le corps de palier (20) fait saillie devant le stator (51) et/ou traverse le stator (51), et/ou que le stator (51) est disposé de manière annulaire autour du corps de palier (20), et/ou qu'un corps d'actionnement (31) d'un dispositif de verrouillage (30), qui est prévu pour bloquer ou verrouiller de manière stationnaire l'élément de palier (12) par rapport à la base de palier (11) dans la position d'utilisation (G) et/ou la position de repos (R), est logé de manière mobile, en particulier de manière à pouvoir coulisser linéairement, dans le corps de palier (20).

13. Attelage de remorque selon l'une quelconque des revendications précédentes, **caractérisé en ce que** l'élément de palier (12) et le moteur d'entraînement (50) sont disposés sur le même côté de la base de palier (11).

14. Attelage de remorque selon l'une quelconque des revendications précédentes, **caractérisé en ce que** l'induit (57) est disposé dans un espace intérieur d'une roue d'engrenage disposée en particulier de manière stationnaire sur l'élément de palier (12), en particulier d'une couronne (86).
